# EUROPÄISCHE PATENTANMELDUNG

(11) **EP 0 664 205 A1**
(43) Veröffentlichungstag der Anmeldung: **26.07.1995**
(21) Anmeldenummer: 94120535.3
(22) Anmeldetag: 23.12.1994
(51) Int. Cl.: B29D 11/00, B29B 11/00, G02B 3/06

(54) **Vorform, aus der Zylinderlinsen, insbesondere Mikro-Zylinderlinsen, herstellbar sind, Verfahren zur Herstellung solcher Zylinderlinsen unter Bildung solcher Vorformen sowie die Verwendung der nach den Verfahren hergestellten Zylinderlinsen**

(30) Priorität: 28.12.1993 DE 4344271
(71) Anmelder: Fraunhofer-Gesellschaft zur Förderung der angewandten Forschung e.V., D-80636 München (DE)
(72) Erfinder: Krause, Volker, D-53639 Königswinter (DE); Zamel, Stefan, D-52146 Würselen (DE); Biesenbach, Jens, D-52062 Aachen (DE); Kösters, Arnd, D-52062 Aachen (DE); Hilgers, Wolfgang, NL-6291 CG-Vaals (NL)
(74) Vertreter: Grimm, Ekkehard, Dipl.-Phys.

(57) **Zusammenfassung**

Es wird eine Vorform, aus der Zylinderlinsen, insbesondere Mikro-Zylinderlinsen, die, quer zur Achse gesehen, ein asphärisches Querschnittsprofil aufweisen, herstellbar sind, angegeben, aus der Zylinderlinsen, insbesondere Mikro-Zylinderlinsen, vereinfacht und dadurch kostengünstig unter Erzielung einer hohen optischen Abbildungsqualität herstellbar sind. Die Vorform aus strahlungstransparentem Material bildet mindestens ein Teilstück eines Kreisrings, wobei zwei gegenüberliegende Flächen, die als Strahlungseintrittsfläche bzw. als Strahlungsaustrittsfläche dienen, in Achsrichtung des Kreisrings oder senkrecht dazu verlaufen, und wobei dieses Teilstück eine Länge aufweist, die einem Vielfachen der Länge einer Einzel-Zylinderlinse entspricht. Weiterhin werden verschiedene Verfahren zur Herstellung einer solchen Vorform angegeben.

## Beschreibung

Die vorliegende Erfindung betrifft eine Vorform, aus der asphärische Zylinderlinsen, insbesondere Mikro-Zylinderlinsen, herstellbar sind. Weiterhin betrifft die vorliegende Erfindung ein Verfahren zur Herstellung von asphärischen Zylinderlinsen, insbesondere von Mikro-Zylinderlinsen, bei dem ein Materialrohling aus strahlungstransparentem Material spanabhebend bearbeitet wird. Darüberhinaus betrifft die vorliegende Erfindung ein Verfahren zur Herstellung von asphärischen Zylinderlinsen, insbesondere von Mikro-Zylinderlinsen, bei dem eine Gießform gebildet und in die Gießform strahlungstransparentes Material gegossen wird. Schließlich betrifft die Erfindung ein Verfahren zum Herstellen von asphärischen Zylinderlinsen, insbesondere von Mikro-Zylinderlinsen, bei dem eine Form bzw. ein Formteil gebildet wird, sowie die Verwendung der nach dem Verfahren hergestellten Zylinderlinsen.

Zur Kollimation von Laserstrahlung werden Linsen, d.h. transmittive Optiken, eingesetzt, um ein divergierendes Strahlungsbündel zu kollimieren. In bestimmten optischen Anwendungsfällen werden hierzu Zylinderlinsen verwendet. Solche Zylinderlinsen finden darüberhinaus ihre besondere Anwendung in Verbindung mit Hochleistungs-Laserdioden, um den in einer Richtung stark divergierenden Strahl zu einem parallelen Strahl zu bündeln. Aufgrund der geringen Baugröße werden die dort eingesetzten Zylinderlinsen auch als Mikro-Zylinderlinsen bezeichnet.

Zur Herstellung solcher Zylinderlinsen, insbesondere solcher Mikro-Zylinderlinsen, sind verschiedene Technologien bekannt; hierzu zählen Preßverfahren, Spritzverfahren, Schleifverfahren, oder sie werden durch verschiedene Ziehprozesse hergestellt.

Bei den bekannten Preßverfahren werden zur Herstellung einzelner Linsen Negativformen verwendet, deren Fertigung sehr zeitaufwendig und teuer ist. Solche Negativformen, die sehr präzise hergestellt werden müssen, werden z.B. durch ein Erodierverfahren in einem Material-Rohling erodiert. Anschließend muß die Oberfläche der Form oder der Formen auf optische Qualität poliert werden. Dieser Arbeitsschritt erfordert, insbesondere Im Hinblick auf Mikro-Zylinderlinsen, kleinste Polierköpfe, die durch das Gesenk geführt werden und nur punktuell geringe Mengen abtragen können, wodurch das Verfahren sehr zeitaufwendig ist, um eine Endform mit den erforderlichen optischen Qualitätsanforderungen zu erstellen. Weiterhin wird die Poliergüte bei Formen für Zylinderlinsen durch den fehlenden Auslauf in der Negativform an den Linsenenden erschwert bzw. eine verminderte Güte erreicht, wodurch die Güte der Enden der in solchen Formen gespritzten Zylinderlinsen beeinträchtigt wird. Üblicherweise werden in solchen Gesenken bzw. Negativformen Glasrohlinge gepreßt, die zuvor in der gewünschten Abmessung angefertigt worden sind.

Die bekannten Spritzverfahren zeigen die gleichen Nachteile bezüglich der Werkzeugherstellung, die vorstehend im Rahmen des Preßverfahrens beschrieben wurden. Die Spritzverfahren zeichnen sich allerdings dadurch aus, daß Materialien gespritzt werden, zum Beispiel Kunststoffe, die relativ geringe Verfahrenstemperaturen erfordern. Es hat sich jedoch gezeigt, daß Linsen, die z.B. aus Kunststoff gespritzt werden, Schlieren und unter Umständen eine Inhomogenität des Brechungsindex aufgrund unterschiedlicher Polymerisation des Materials aufweisen.

Ein weiteres Verfahren zur Herstellung von Linsen ist die spanabhebende Bearbeitung eines Rohlings aus strahlungstransparentem Material. Bei diesem Verfahren werden Glasrohlinge auf die endgültige Linsenform geschliffen. Zeitaufwendig ist bei diesem Verfahren die schichtweise erfolgende Materialabtragung bei der Erstellung jeder einzelnen Linse, was insbesondere bei der Herstellung von Mikro-Linsen aufgrund der sehr geringen Abmessungen problematisch ist. Die verwendete Schleifscheibe wird dabei mit geringer Vorschubgeschwindigkeit, allerdings hoher Relativgeschwindigkeit, über die Linsenoberfläche geführt. Da kein kontinuierlicher Eingriff des Werkzeugs beim schleifenden Abtrag erfolgt, entsteht eine rauhe Linsenoberfläche mit Schleifriefen, die in unterschiedlichen Richtungen der Linsenoberfläche verlaufen. Diese rauhe Linsenoberfläche muß in einem nachfolgenden Polierverfahrensschritt geglättet werden. Üblicherweise sind die Schleifwerkzeuge auf einer großen Eingriffsfläche wirksam, so daß hohe Spankräfte auftreten, die wiederum eine spezielle Halterung der Linse erfordern, um eine Zerstörung der Zylinderlinse durch ein Ablösen aus der Halterung während der Bearbeitung zu vermeiden. Weiche Materialien, wie beispielsweise Kunststoffe, sind aufgrund der hohen Temperaturentwicklung bei dem Schleifen für dieses Verfahren nicht verwendbar.

Die bekannten Ziehverfahren zur Herstellung von Mikro-Linsen gehen von einer maßstäblich vergrößerten Linse aus, die aufgrund ihrer größeren Abmessungen leichter zu handhaben und dadurch herstellbar ist. Durch einen Ziehvorgang wird die Vorform auf die gewünschten Mikroabmessungen reduziert. In der Praxis zeigen sich jedoch wesentliche Mängel des Verfahrens, da die Oberflächen der auf die Mikromaße gezogenen Vorformen meist rauh und wellig sind. Ursache hierfür können die durch den thermischen Porzeß bedingten hohen Oberflächenspannungen sein, die während des Ziehvorgangs nicht zu vermeiden sind. Desweiteren ist die Formgenauigkeit nicht in der geforderten Präzision gegeben. Weiterhin zeigen sich durch den Erstarrungsvorgang des gezogenen Teils Spannungsprofile, die die optische Abbildungsgüte der Linse nachteilig beeinflussen.

Da die nach den vorstehend angegebenen Verfahren hergestellten Mikro-Linsen in vielen Fällen starke Linsenfehler aufweisen, ist es bekannt, zur Korrektur der Linsenfehler Gitterstrukturen auf die endbearbeitete Linsenoberfläche aufzubringen, um durch die beugende Wirkung dieser Strukturen die Linsen optisch zu korrigieren. Es ist ersichtlich, daß solche Korrekturen in jedem Fall Verluste mit sich bringen und die Abbildungsqualität solcher transmittiven Optiken benachteiligen. Darüberhinaus belasten solche zusätzlichen, korrigierenden Verfahrensschritte das Endprodukt mit zusätzlichen Kosten.

Ausgehend von dem vorstehend beschriebenen Stand der Technik liegt der Erfindung die Aufgabe zugrunde, eine Vorform anzugeben, aus der Zylinderlinsen, insbesondere Mikro-Zylinderlinsen, vereinfacht und dadurch kostengünstig unter Erzielung einer hohen optischen Abbildungsqualität herstellbar sind; weiterhin liegt der Erfindung die Aufgabe zugrunde, Verfahren zur Herstellung solcher Zylinderlinsen, insbesondere Mikro-Zylinderlinsen, unter Bildung einer solchen Vorform anzugeben.

Die vorstehende Aufgabe bzw. die vorstehenden Aufgabenpunkte werden hinsichtlich einer Vorform, aus der Zylinderlinsen, insbesondere Mikro-Zylinderlinsen, die, quer zur Achse gesehen, ein asphärisches Querschnittsprofil aufweisen, herstellbar sind, dadurch gelöst, daß die Vorform mindestens ein Teilstück eines Kreisrings bildet, wobei zwei gegenüberliegende Flächen, die als Strahlungseintrittsfläche bzw. als Strahlungsaustrittsfläche dienen, in Achsrichtung des Kreisrings oder senkrecht dazu verlaufen, und wobei dieses Teilstück eine Länge aufweist, die einem Vielfachen der Länge einer Einzel-Zylinderlinse entspricht.

Hinsichtlich eines Verfahrens zur Herstellung von asphärischen Zylinderlinsen, insbesondere von Mikro-Zylinderlinsen, bei dem ein Materialrohling aus strahlungstransparentem Material spanabhebend bearbeitet wird, wird die vorstehende Aufgabe durch folgende Verfahrensschritte gelöst:
Bereitstellung eines Materialrohlings, dessen Länge einem Vielfachen der Länge einer zu erstellenden Einzel-Zylinderlinse beträgt,
Bildung eines geschlossenen Rings aus dem Matrialrohling,
Einspannen des Rings in eine Halteeinrichtung,
Rotieren des Rings mit hoher Drehgeschwindigkeit um eine Mittenachse senkrecht zu der durch den Ring aufgespannten Ebene,
Abdrehen der freien Außenfläche des Rings entsprechend der Querschnitts-Außenkontur der zu erstellenden, eine Strahlungseintritts- und Strahlungsaustrittsfläche aufweisenden Einzel-Zylinderlinse unter radialer und/oder axialer Verschiebung eines Zerspanungswerkzeugs,
Unterteilen des bearbeiteten Rings in einzelne, Einzel-Zylinderlinsen bildende Teilsegmente.

Hinsichtlich eines Verfahrens zur Herstellung von asphärischen Zylinderlinsen, insbesondere von Mikro-Zylinderlinsen, bei dem eine Gießform gebildet und in der Gießform strahlungstransparentes Material gegossen wird, wird die Aufgabe durch folgende Verfahrensschritte gelöst:
Bereitstellung mindestens zweier Gießformrohlinge für spanabhebende Bearbeitung,
Bildung einer mindestens zweiteiligen Gießform,
indem in dem einen Gießformrohling eine Vertiefung mit einer zu einer Mittenachse rotationssymmetrisch verlaufenden, die Vertiefung begrenzenden Mantelfläche gebildet wird,
indem der andere Gießformrohling in seiner Außenkontur der Vertiefung angepaßt wird,
indem mindestens einer dieser Gießformrohlinge unter Einspannung in eine Halteeinrichtung mit hoher Drehgeschwindigkeit um die Mittenachse rotiert wird,
indem in der Mantelfläche oder in der senkrecht zur Mittenachse verlaufenden Bodenfläche eine umlaufende Nut herausgedreht wird, die im Querschnitt zumindest teilweise der Querschnitts-Außenkontur hinsichtlich der Strahlungsaustritts- oder der Strahlungseintrittsfläche der zu erstellenden Einzel-Zylinderlinse entspricht, und zwar unter radialer und/oder axialer Verschiebung eines Zerspanungswerkzeugs,
indem die Nut durch Ineinandersetzen der beiden Gießformrohlinge verschlossen wird,
anschließendes Ausgießen der Nut mit dem strahlungstransparenten Material,
Aushärten des Materials,
Herausnahme des ausgehärteten Material-Rings aus der Gießform,
Unterteilen des Material-Rings in einzelne, Einzel-Zylinderlinsen bildende Teilsegmente.

Schließlich wird die vorstehende Aufgabe bei einem Verfahren zur Herstellung von asphärischen Zylinderlinsen, insbesondere von Mikro-Zylinderlinsen, bei dem eine Extrudier-Form gebildet wird, durch folgende Verfahrensschritte gelöst:
Bereitstellung mindestens zweier Extrudierdüsenrohlinge für spanabhebende Bearbeitung,
Bildung einer mindestens zweiteiligen Extrudierdüse,
indem in dem einen und/oder dem anderen Extrudierdüsenrohling eine konzentrisch zu einer Mittenachse verlaufende Ausnehmung gebildet wird, wobei dies durch Einspannen des Extrudierdüsenrohlings in eine Halteeinrichtung und unter Rotieren mit hoher Drehgeschwindigkeit, und zwar unter radialer und/oder axialer Verschiebung eines Zerspanungswerkzeugs erfolgt, wobei die Ausnehmung mindestens teilweise der Querschnitts-Außenkontur hinsichtlich der Strahlungsaustritts- oder der Strahlungseintrittsfläche der zu erstellenden Einzel-Zylinderlinse entspricht,
indem die so bearbeiteten Extrudierdüsenrohlinge so aneinander angepaßt werden, daß die Ausnehmung(en) einen Extrudierdüsenkanal in Form eines Kreisbogenabschnitts bilden,
Extrudieren eines Strangs aus strahlungstransparentem Material,
Aushärten des Material-Strangs,
Unterteilen des Material-Strangs in einzelne, Einzel-Zylinderlinsen bildende Teilsegmente.

Der Erfindung liegt sowohl hinsichtlich der Vorform als auch hinsichtlich der einzelnen, unterschiedlichen Verfahren der allgemeine Erfindungsgedanke zugrunde, eine kreisförmige Negativ- oder Positivform herzustellen, die auf einer Ultrapräzisionsdrehmaschine unter ständigem Rotieren mit hoher Geschwindigkeit gefertig werden kann. Eine positive Vorform wird hierbei, ausgehend von einem Rohling, der eingespannt wird, so abgedreht, daß das zerspanende Werkzeug ständig nur in einer Richtung in den Materialrohling eingreift. Gleiches gilt für eine Negativform, die dazu dient, eine solche Vorform zu pressen, zu gießen oder zu extrudieren, wobei für solche Negativformen ebenfalls eine kreisförmige Nut unter Drehen um eine zentrische Mittenachse in einem Materialrohling hergestellt wird, derart, daß das spanabehende Werkzeug ständig mit dem Materialrohling in Eingriff steht. Solche positiven bzw. negativen Formen bilden Kreisringe oder, entsprechend in einzelne Segmente unterteilt, Kreisringabschnitte, die einem Vielfachen der Länge einer herzustellenden Zylinderlinse entsprechen. Nachdem eine solche Negativform hergestellt ist, werden danach die Vorform-Körper hergestellt, die bereits in ihrer optischen Qualität der Einzel-Zylinderlinse entsprechen, jedoch in ihrer Länge noch auf die Länge der Einzel-Zylinderlinse unterteilt werden müssen, wobei die stirnseitigen Trennstellen für die optische Abbildungsqualität einer Zylinderlinse unerheblich sind. Diese grundsätzliche Verfahrensweise zeichnet sich durch die hohe Bearbeitungsgeschwindigkeit des ständig mit dem Werkstück in Eingriff stehenden, zerspanenden Werkzeugs aus, wobei gleichzeitig aufgrund der hohen Geschwindigkeiten eine hohe Güte der bearbeiteten Oberfläche sowohl einer positiven Vorform als auch einer negativen Vorform erzielt werden kann. Weiterhin ist die Fertigung einer Vielzahl von Linsen in einem Arbeitsgang mit einer positiven Vorform oder einer negativen Vorform möglich, aufgrund derer eine Vielzahl von Einzel-Zylinderlinsen erstellt werden können. Schließlich vermeidet das angegebene spanabhebende Bearbeitungsverfahren eine sich ändernde Richtung zu dem Materialrohling, d.h. es werden nur radial um die Mittenachse umlaufende Schnittrichtungen erzeugt. Auch wird die Materialhomogenität durch diese gleichmäßig beibehaltene Eingriffsrichtung des zerspanenden Werkzeugs nicht beeinträchtigt.

Es ist ersichtlich, daß die Einzel-Zylinderlinse, die durch Unterteilung eines Kreisring-Körpers, der im axialen Querschnitt den Krümmungen der erwünschten Strahlungseintritts- und Strahlungsaustrittsfläche der Zylinderlinse entspricht, nach Unterteilen des Kreisrings in die Längen der Einzel-Zylinderlinsen, eine gewisse Krümmung in Achsrichtung aufweist, deren Größe durch den gewählten Durchmesser des Kreisrings bestimmt wird. Durch einen relativ großen Durchmesser kann in Relation zu der gewünschten Länge der Einzel-Zylinderlinse diese Krümmung gering gehalten werden.

Vorzugsweise wird die Vorform so in ihrem Querschnittsprofil, d.h. das Querschnittsprofil des Kreisrings, gewählt, daß dieses Profil auf der zum Krümmungsmittelpunkt weisenden Seite eine Fläche aufweist, die eine Zylindermantelfläche bildet; diese Fläche bildet die Strahlungseintrittsfläche der späteren Einzel-Zylinderlinse. Auf diese Fläche kann dann, nach Unterteilung des Rings in Einzel-Zylinderlinsen, ein optisches, strahlungstransparentes Teil, das eine ebene Fläche aufweist, beispielsweise ein plattenförmiges Teil, aufgeklebt werden, wobei gleichzeitig die Krümmung unter Anpressen und Fixieren mit einem Klebemittel, ausgeglichen werden kann. Dieses Klebemittel ist vorzugsweise in seinem Brechungsindex dem Material der Zylinderlinse angepaßt, um entsprechende Spalte und Riefen infolge von Oberflächenrauhigkeiten der Kunststoff-Linse aufzufüllen. Hierdurch werden die Streuverluste an diesen Flächen reduziert. In bevorzugten Ausbildungen ist dieses optische Teil aus Glas, Quarzglas oder Saphir gebildet, die sich dadurch auszeichnen, daß sie, auf der Strahlungseintrittsfläche aufgebracht, hohen Leistungsdichten standhalten, insbesondere in Verbindung mit Hochleistungs-Laserdioden. Außerdem sind sie extrem biegestabil, so daß die Linse nachgiebig an dieses vorzugsweise auf der Verbindungsfläche plane Teil angedrückt und eine geradlinige Achse der Zylinderlinse erhalten wird. In Verbindung mit einem solchen optischen Teil ist der eigentliche Linsenkörper mit der asphärischen Fläche auf der rückwärtigen Seite aus einem Kunststoffmaterial, bevorzugt Polymethylmetacrylat, hinsichtlich dieser hohen Leistungsdichten, unproblematisch. Eine Platte aus Saphir als solches die Strahlungseintrittsfläche und gleichzeitig die leichte Krümmung ausgleichendes Teil ist besonders hinsichtlich einer Kühlung einer aus einem Kunststoffmaterial hergestellten Zylinderlinse hervorzuheben. Um die Einzel-Zylinderlinse in Form des abgelängten Teilsegments in der Achse gerade zu richten, können Justierhilfen in Form von Nuten und/oder Stegen oder in Form von Wölbungen dienlich sein, die im Bereich der zu verbindenden Flächen vorgesehen werden und die das Geraderichten vor dem Verkleben erleichtern.

In Verbindung mit einem Verfahren, bei dem ein Materialrohling spanabhebend bearbeitet wird, wie es vorstehend angegeben ist, wird in bevorzugten Verfahrensweisen der Ring aus einem plattenförmigen Materialrohling gebildet, der zu einem Kreisring gebogen und ggf. an den Enden verbunden wird und dessen einer Randbereich in die Halteeinrichtung eingespannt wird. Ein solcher plattenförmiger Materialrohling kann beispielsweise ein Materialstreifen mit einer Breite von 40 mm und einer Länge von 1000 mm mit einer Dicke von 1,5 mm sein, dessen Randbereich in die Halteeinrichtung eingespannt wird und der dann auf einer Breite von 2 mm spanabhebend bearbeitet wird.

In einer anderen bevorzugten Verfahrensweise wird der Ring auf einer Trägerplatte gebildet, entweder als einstückiges Teil mit der Trägerplatte oder auf der Trägerplatte befestigt, wobei diese Trägerplatte dann in die Halteeinrichtung zur spanabhebenden Bearbeitung eingespannt wird.

Aufgrund der guten Zugänglichkeit des sich drehenden Materialrohlings auf der Außenseite wird bevorzugt an der freien Stirnfläche des Rings die im Querschnitt gekrümmte Strahlungsaustrittsfläche der zu erstellenden Einzel-Zylinderlinse gebildet, wobei dann die Strahlungseintrittsfläche, falls diese als ebene oder plane Fläche ausgeführt werden soll, durch einen Abstich des Rings in einer Ebene senkrecht zu der Mittenachse, um die das Drehteil gedreht wird, erfolgt. In einer alternativen Verfahrensweise, wird auf der radial außenliegenden Fläche des Rings die im Querschnitt gekrümmte Strahlungsaustrittsfläche der zu erstellenden Einzel-Zylinderlinse gebildet, während als Strahlungseintrittsfläche auf der Innenseite eine Zylindermantelfläche, deren Achse die Mittenachse bildet, um die sich das Teil bei der spanabhebenden Bearbeitung dreht, ausgeführt wird.

Mit dem vorstehend angegebenen spanabhebenden Verfahren wird eine hinsichtlich der Strahlungseintritts- und Strahlungsaustrittsfläche endbearbeitete, positive Vorform gebildet, deren Umfang einem Vielfachen der herzustellenden Einzel-Zylinderlinse entspricht. Durch Unterteilen des Rings können hinsichtlich ihrer Krümmungsradien und damit hinsichtlich ihrer optischen Eigenschaften identische Einzel-Zylinderlinsen hergestellt werden. Darüberhinaus führt diese Verfahrensweise zur kostengünstigen Herstellung von Zylinderlinsen, insbesondere von Mikro-Zylinderlinsen, im Gegensatz zu den bekannten Verfahren, bei denen die Einzel-Zylinderlinsen jeweils in gesonderten Verfahrensabläufen einzeln oberflächenbearbeitet werden müssen. Das Unterteilen des Kreisrings in die Einzel-Zylinderlinsen erfordert kein Eingreifen in die Strahlungseintritts- bzw. Strahlungsaustrittsflächen, sondern greift nur in die Stirnflächen der Zylinderlinsen ein, die auf die optische Abbildungsqualität praktisch keinen Einfluß haben.

Die vorstehenden Ausführungen zur Herstellung einer positiven Vorform aus einem Materialrohling aus strahlungstransparentem Material sind auf ein Verfahren übertragbar, das eingangs angegeben ist, bei dem eine Gießform gebildet wird. Diese Gießform stellt eine Negativform der Vorform dar, aus der durch Unterteilen Einzel-Zylinderlinsen gebildet werden. Entsprechend den als vorteilhaft angegebenen Verfahrensschritten, die bei der Herstellung der positiven Vorform vorgenommen werden, kann das Verfahren zur Bildung der Gießform so durchgeführt werden, daß in dem Gießformrohling eine Fläche als Zylindermantelfläche ausgeführt wird, vorzugsweise an der inneren, zur Drehachse hin liegenden Seite der Nut, die dann die Strahlungseintrittsfläche an der in der Gießform gegossenen Vorform bildet. Die Nut, in der die kreisringförmigen Vorformen aus strahlungstransparentem Material gegossen werden, kann auch in einer bevorzugten Durchführung des Verfahrens so gebildet werden, daß die die Strahlungseintritts- und Strahlungsaustrittsflächen bildenden Bereiche der Nut in Richtung der Drehachse verlaufen. Allerdings ist bei dieser Ausführung zu beachten, daß sie bevorzugt für große Durchmesser des Kreisrings gewählt wird, da dann eine aus einem solchen Kreisring als Teilsegment gebildete Einzel-Zylinderlinse eine geringe Krümmung senkrecht zu der Strahlungseintritts- und Strahlungsaustrittsfläche besitzt. In einer anderen Ausführung, in der die Strahlungseintrittsfläche als ebene oder plane Fläche in Form einer Zylindermantelfläche beispielsweise auf der radial innenliegenden Seite der Nut gebildet wird, kann die Krümmung durch das Aufkleben eines planen, plattenförmigen Teils, mit einer hohen Biegefestigkeit ausgeglichen werden.

Das erfindungsgemäße Verfahren, bei dem eine Extrudierdüse hergestellt und ein Strang aus strahlungstransparentem Material extrudiert wird, hat wiederum den Grundgedanken zum Gegenstand, eine konzentrisch zu einer Mittenachse verlaufende Ausnehmung unter spanabhebenden Verfahrensmaßnahmen zu erzeugen. Da eine solche Extrudierdüse nur ein Teilsegment erfordert, können in einem Verfahrensschritt die mindestens zwei Teile, aus denen die Extrudierdüse zusammengesetzt wird, aus zwei Rohlingen in Form von einer umlaufenden Ausnehmung hergestellt werden; diese Drehteile werden dann in mehrere Teilabschnitte unterteilt werden, so daß aus diesen Drehteilen mehrere identische Extrudierdüsen in einem Arbeitsgang hergestellt sind. Auch diese Ausnehmungen der Extrudierdüse werden auf einer Präzisionsdrehmaschine unter hohen Drehzahlen herausgedreht, mit dem Vorteil, daß das Werkzeug unter axialer und radialer Verschiebung zu der Drehachse keine grundsätzlichen Richtungsänderungen im Bereich der Ausnehmungen während der gesamten Bearbeitung vornimmt.

Weitere vorteilhafte Merkmale der erfindungsgemäßen Vorform, der erfindungsgemäßen Verfahren zum Herstellen einer solchen Voform aus einem strahlungstransparentem Material, und zwar des Verfahrens zum Herstellen von Zylinderlinsen unter Bildung einer Gießform und des Verfahrens zur Herstellung von Zylinderlinsen unter Herstellung einer Extrudierdüse sind in den jeweiligen Unteransprüchen angegeben.

Nachfolgend werden verschiedene Ausführungsbeispiele von Verfahren zum Herstellen von asphärischen Zylinderlinsen anhand der Zeichnung erläutert. In der Zeichnung zeigt:
- Fig. 1: eine Vorform, in Form eines konzentrischen Kreisrings-Körpers aus der Mikro-Zylinderlinsen herstellbar sind,
- Fig. 2: einen Schnitt entlang der Linie I-I in Figur 1 zur Darstellung einer möglichen Querschnittsform des Kreisring-Körpers,
- Fig. 3: eine der Figur 2 entsprechende Schnittdarstellung mit einem anderen Querschnittsprofil,
- Fig. 4: schematisch eine Spannvorrichtung einer Ultrapräzisions-Diamantdrehmaschine mit einem eingespannten Materialrohling,
- Fig. 5: einen Schnitt durch die Anordnung der Figur 4 entlang der Schnittlinie V-V,
- Fig. 6: eine Schnittdarstellung entsprechend der Figur 5, wobei der Materialrohling bereits zum Teil an seiner Außenkontur bearbeitet ist, mit einer ausschnittsweise auf der linken Seite dargestellten, alternativ bearbeiteten Querschnittsform des Materialrohlings,
- Fig. 7: einen Schnitt durch die Mittenachse einer schematisch dargestellten, zweiteiligen Gießform mit einem schematisch angedeuteten spanabhebenden Werkzeug, wobei die beiden Teile der Gießform voneinander abgenommen gezeigt sind, mit der ein Kreisring-Körper ähnlich der Figur 2 herstellbar ist,
- Fig. 8: die abgewandelte Gießform in einer Darstellung entsprechend der Figur 7, wobei die beiden Gießformteile ineinandergesetzt sind,
- Fig. 9: eine der Ausführungsform nach den Figuren 7 und 8 ähnliche, zweiteilige Gießform, wobei die Vertiefung in einem Bodenbereich des einen bzw. anderen Gießformteils eingedreht ist, mit der ein Kreisring-Körper ähnlich der Figur 3 herstellbar ist,
- Fig. 10: schematisch in einer Draufsicht eine zweiteilige Extrudierdüse, mit der ein Strang aus einem strahlungstransparenten Material extrudiert werden kann,
- Fig. 11: einen Schnitt entlang der Schnittlinie XI-XI in Figur 10, wobei mit diesem Querschnitt ein Körper einer Querschnittsform extrudiert werden kann, wie er in Figur 2 gezeigt ist,
- Fig. 12: eine der Figur 11 ähnliche Schnittdarstellung mit einem gegenüber der Ausführung der Figuren 10 und 11 geänderten Aufbau, wobei mit diesem Querschnitt ein Körper einer Querschnittsform extrudiert werden kann, wie er in Figur 3 gezeigt ist,
- Fig. 13: eine Einzel-Zylinderlinse mit einem Querschnitt entsprechend der Vorform der Figur 3, die mit ihrer Strahlungseintrittsfläche auf einer Platte aufgelegt ist,
- Fig. 14: die Einzel-Zylinderlinse der Figur 12, wie sie mit der Platte verklebt ist,
- Fig. 15: einen Schnitt entlang der Schnittlinie XIV-XIV in Figur 14 mit ein- oder beidseitigem Anschlag zur Zentrierung der Linsenachse,
- Fig. 16: eine der Figur 15 ähnliche Darstellung mit einem geänderten Profil und einer Zentrierung der Längsachse durch eine Wölbung der aufeinanderliegenden Verbindungsflächen,
- Fig. 17: eine der Figur 15 ähnliche Anordnung in einer Draufsicht mit einer lose aufgelegten, noch nicht gerade ausgerichteten Zylinderlinse,
- Fig. 18: die Anordnung der Figur 17 mit aufgeklebter Zylinderlinse, und
- Fig. 19: eine Gießform ähnlch derjenigen, wie sie schematisch in den Figuren 7 bis 9 dargestellt ist, allerdings in Form eines Teilsegments.

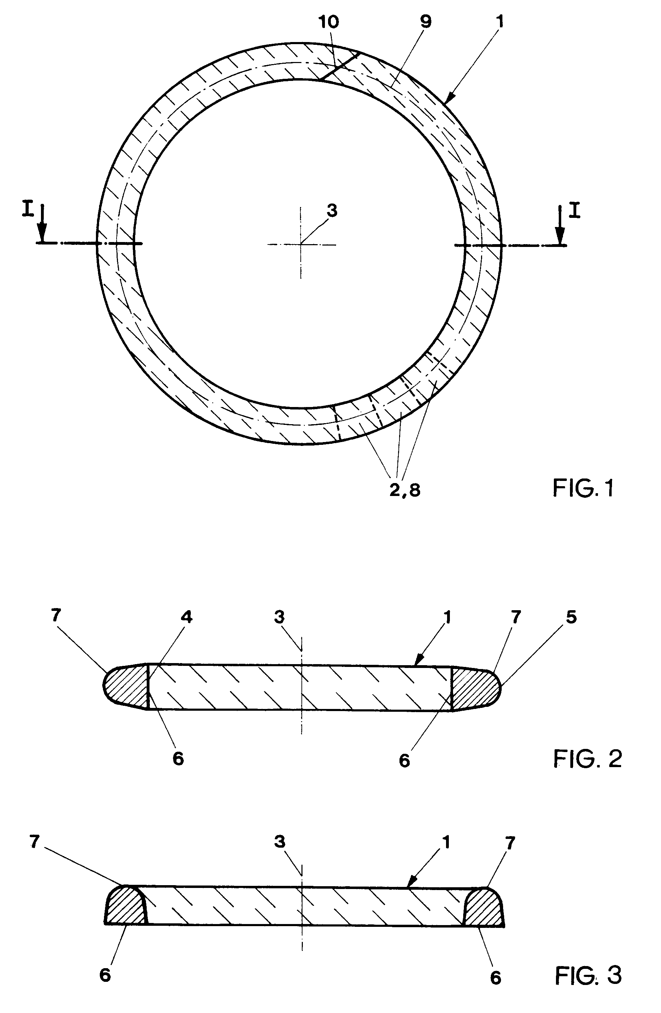

In den Figuren 1 und 2 ist eine Vorform gezeigt, aus der Zylinderlinsen herstellbar sind. Diese Vorform aus strahlungstransparentem Material ist als Kreisring hergestellt, deren Querschnitt, wie er aus Figur 2 oder alternativ aus Figur 3 ersichtlich ist, dem Querschnitt einer zu erstellenden Einzel-Zylinderlinse entspricht. Der Kreisring-Körper 1 besitzt eine Umfangslänge eines Vielfachen der Länge einer Einzel-Zylinderlinse. Dies bedeutet, daß zum Herstellen von Zylinderlinsen, insbesondere von Mikro-Zylinderlinsen, ein solcher Kreisring-Körper 1 mit dem gewünschten Querschnittsprofil erstellt wird, wozu verschiedene Verfahrensweisen in Frage kommen, und nach der Herstellung eines solchen Kreisring-Körpers 1 dieser in einzelne Abschnitte bzw. Teilsegmente 2 unterteilt wird, wie dies in Figur 1 im unteren Bereich mit Trennlinien angedeutet ist. Wie aus Figur 2 ersichtlich ist, ist der Querschnitt des Kreisring-Körpers 1 derart gewählt, daß an der zur Mittenachse 3 hin liegenden Seite des Kreisring-Körpers 1 eine Zylindermantelfläche 4 gebildet ist, die bezüglich des Teilsegments 2 bzw. der späteren Einzel-Zylinderlinse 8 die Strahlungseintrittsfläche darstellt. An der radial zur Mittenachse 3 außenliegenden Seite 5 besitzt der Kreisring-Körper 1 ein abgerundetes Querschnittsprofil, das hinsichtlich der Einzel-Zylinderlinse als Strahlungsaustrittsfläche dient. Im Gegensatz zu dem Querschnittsprofil des Kreisring-Körpers 1, wie es in Figur 2 dargestellt ist, kann dieses auch durch eine Fläche gebildet werden, die in einer Ebene senkrecht zu der Mittenachse 3 verläuft; diese Ausführung ist in der Figur 3 dargestellt.

Anhand der Figuren 1 bis 3 ist ersichtlich, daß der Kreisring-Körper 1 rotationssymmetrisch zu der Mittenachse 3 ausgebildet ist. Dies bedeutet, daß die Teilsegmente 2 bzw. die durch diese Teilsegmente gebildeten Einzel-Zylinderlinsen bezüglich ihres Querschnittsprofils identische Körper sind. Weiterhin ist aus diesen Figuren ersichtlich, daß für die Herstellung solcher Einzel-Zylinderlinsen, ausgehend von dem Kreisring-Körper 1 als Vorform, Verfahren gewählt werden können, bei denen ein Materialrohling unter Drehung um die Mittenachse 3 spanabhebend bearbeitet wird, bzw. Verfahren, bei denen eine Negativform, ebenfalls unter Drehung um eine Mittenachse, hergestellt werden, so daß eine Rotationssymmetrie des Kreisring-Körpers 1 und dadurch eine reproduzierbare Geometrie der Einzel-Zylinderlinsen in Form der Teilsegmente 2 gewährleistet ist.

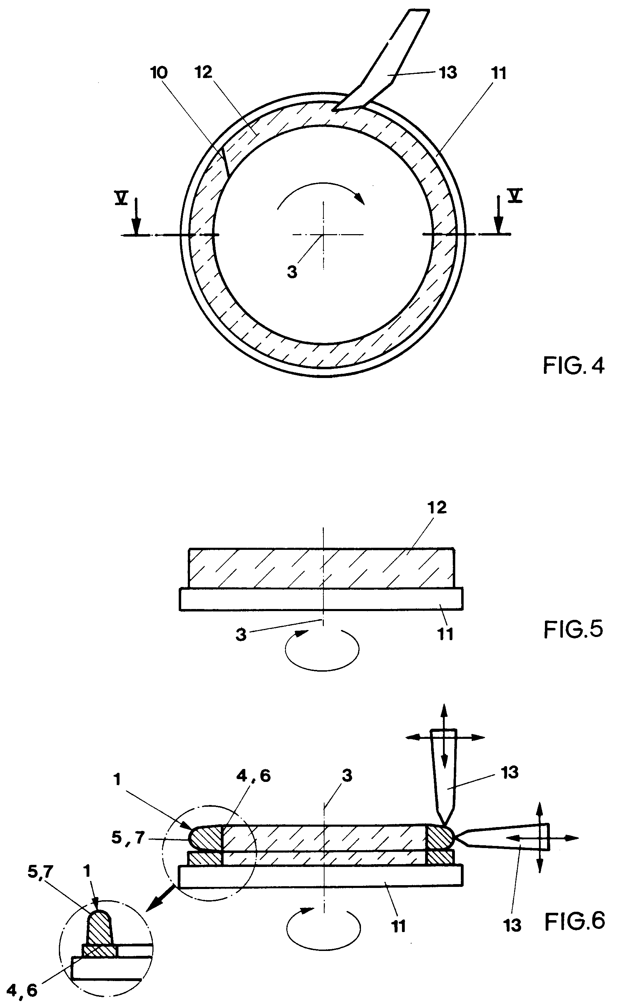

Eine Möglichkeit, den Kreisring-Körper 1, wie er in den Figuren 1 bis 3 gezeigt ist, herzustellen, ist in den Figuren 4 bis 6 dargestellt. Zunächst wird ein Materialrohling in Form einer 1,5 mm dicken Kunststoffplatte mit einer Länge von etwa 1000 mm und einer Breite von etwa 40 mm bereitgestellt. Dieser Materialstreifen aus optischem Material, beispielsweise aus Plexiglas^{R} oder Macrolon^{R} (Plexiglas^{R} = eingetragenes Warenzeichen der Firma Röhm, Macrolon^{R} = eingetragenes Warenzeichen der Firma Bayer) werden zu einem Kreisring gebogen und an ihren Enden in Form einer Schäftung, die in Figur 4 mit dem Bezugszeichen 10 bezeichnet ist, verbunden. Dieser Ring wird in eine Spanneinrichtung, in den Figuren 4 bis 6 in Form einer Trägerplatte 11 dargestellt, einer Ultrapräzisions-Diamantdrehmaschine eingespannt und um die Dreh- bzw. Mittenachse 3 rotiert, wie dies in Figur 5 angedeutet ist. Mit einem spanabhebenden Werkzeug 13 werden die stirnseitige Fläche sowie die radial nach außen und nach innen orientierten Flächen bearbeitet, und zwar unter Verschiebung des Werkzeugs 13 sowohl in axialer als auch radialer Richtung zu der Mitten- bzw. Drehachse 3, wie anhand der Doppelpfeile der schematisch dargestellten Werkzeuge 13 angedeutet ist. Durch diese spanabhebende Bearbeitung des Materialstreifens 11 wird zunächst die abgerundete Querschnittsform des Querschnitts der gewünschten Zylinderlinse erzeugt, wobei dieser abgerundete, die Strahlungsaustrittsfläche 7 der Einzel-Zylinderlinse 8 bildende Querschnitt an der außenliegenden oder innenliegenden Seite 5 des Rings abgedreht wird. Alternativ zu der Darstellung der Figur 6 kann diese abgerundete Fläche auch an der freien Stirnfläche des Materialstreifens 12 erzeugt werden, so daß ein Querschnittsprofil des Materialstreifens 12 entsteht, wie es anhand der im Querschnitt in Figur 3 dargestellten Vorform gezeigt ist. Um zur Bildung der Strahlungsaustrittsfläche 7 und der Strahlungseintrittsfläche 6 ein Umspannen des Materialstreifens 12 zu vermeiden, werden in einem Drehvorgang sowohl die Strahlungsaustrittsfläche 7 als auch die Strahlungseintrittsfläche 6 erstellt. In einer Ausführungsform, die in Figur 6 dargestellt ist, ist die Strahlungseintrittsfläche wiederum, entsprechend der Querschnittsform der Vorform der Figur 2, als Zylindermantelfläche 4, deren Achse mit der Mittenachse 3 übereinstimmt, an der radial innenliegenden Seite des Materialstreifens 12 gebildet. Um im Zusammenhang mit einer Querschnittsform, die in Figur 3 gezeigt ist, die Strahlungseintrittsfläche 6 zu bilden, werden zunächst, ausgehend von dem Material streifen 12, wie er entsprechend der Figur 5 eingespannt ist, die freien Seiten spanabhebend bearbeitet und die im Querschnitt gekrümmte Strahlungsaustrittsfläche 7 gebildet; nachdem diese Strahlungsaustrittsfläche 7 endbearbeitet ist, erfolgt ein Abstich dieses Kreisrings entlang einer Ebene, die senkrecht zu der Mittenachse 3 verläuft. Alternativ zu der vorstehend beschriebenen Querschnittsform ist auf der linken Seite der Figur 6 ein alternatives, spanabhebend bearbeitetes Querschnittsprofil dargestellt, das zu einem Kreisring-Körper 1 führt, das in Figur 3 dargestellt ist.

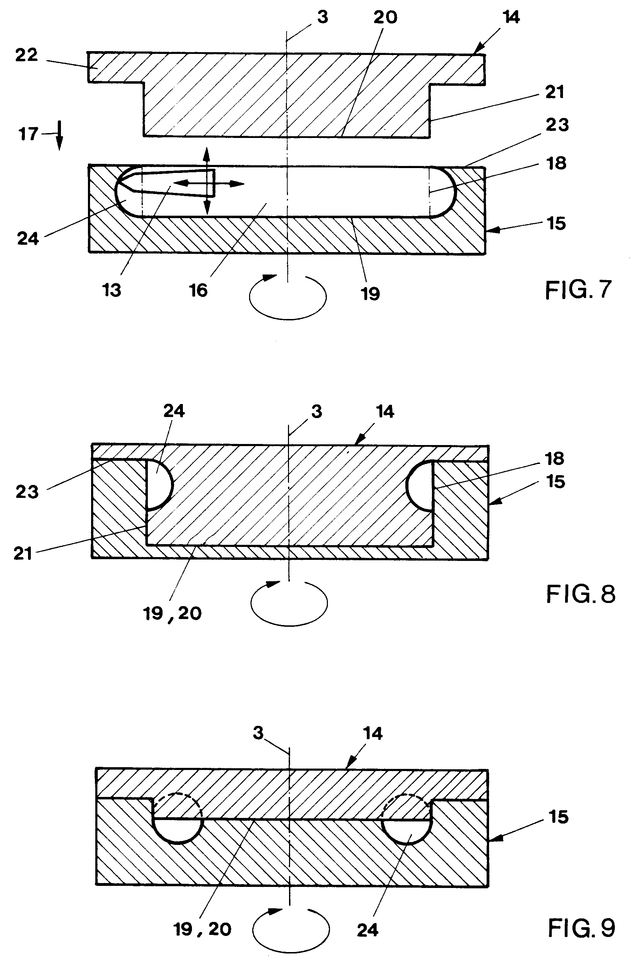

In den Figuren 7 bis 9 sind verschiedene Gießformen gezeigt, in denen eine Vorform entsprechend Figur 1 mit strahlungstransparentem Material gegossen werden kann. Eine solche Gießform ist aus mindestens zwei Gießformrohlingen bzw. Gießformteilen 14 und 15 zusammengesetzt. Das eine Gießformteil 15 besitzt eine aus Richtung des Sichtpfeils 17 in Figur 7 gesehen, kreisringförmige Vertiefung 16, die durch eine umlaufende Zylindermantelfläche 18 begrenzt ist. Die Zylindermantelfläche 18, die in Figur 7 durch die unterbrochene Linie nur angedeutet ist, erstreckt sich senkrecht zu der Bodenfläche 19 der Vertiefung 16. Das obere Gießformteil 14 besitzt im unteren Bereich eine Außenkontur, die der Vertiefung 16 in dem unteren Gießformteil 15 derart angepaßt ist, daß die Bodenfläche 20 des Gießformteils 14 beim Aufsetzen des Gießformteils 14 auf das untere Gießformteil 15 auf dessen Bodenfläche 19 zur Anlage gelangt, während die Zylindermantelfläche 21 des Gießformteils 14 der Zylindermantelfläche 18 des Gießformteils 15 angepaßt ist. Weiterhin weist das obere Gießformteil 14 eine Schulter 22 auf, die sich auf eine die Vertiefung 16 begrenzende Randfläche 23 des unteren Gießformteils 15 aufsetzt. Das untere Gießformteil 15 wird in eine Ultrapräzisions-Drehmaschine eingespannt und mit einem spanabhebenden Werkzeug, in Figur 7 ebenfalls mit dem Bezugszeichen 13 bezeichnet, unter axialer und radialer Verschiebung des Werkzeugs 13 bearbeitet, indem eine Nut 24 in die Zylindermantelfläche 18 eingedreht wird. Die im Querschnitt gekrümmte Kontur der Nut 24 bildet die Strahlungsaustrittsfläche eines in dieser Gießform gespritzten Kreisring-Körpers 1, aus dem Einzel-Zylinderlinsen hergestellt werden. In der Ausführung der Gießform, wie sie in der Figur 7 dargestellt ist, wird die Zylindermantelfläche 21 des oberen Gießformteils 14 nicht weiter bearbeitet, da diese Zylindermantelfläche die Strahlungseintrittsfläche des Kreisring-Körpers 1, der darin gespritzt wird, bzw. der einzelnen Zylinderlinsen bildet; sofern eine höhere Qualität dieser Fläche 21 erforderlich ist, kann an dieser Fläche ein Ultrapräzisionsdrehschritt durchgeführt werden.

In der Gießform, wie sie die Figur 7 im Querschnitt zeigt, wird aus strahlungstransparentem Material eine Vorform gespritzt, die etwa dem Kreisring-Körper 1 entspricht, der im Querschnitt in der Figur 2 dargestellt ist.

In der Figur 8 ist eine der Figur 7 ähnliche, aus zwei Teilen 14 und 15 gebildete Gießform dargestellt, wobei allerdings, im Gegensatz zu der Ausführung der Figur 7, die Nut 24 in der Zylindermantelfläche 21 des oberen Gießformteils 14 ausgeführt ist. Mit dieser Gießform wird ein Kreisring-Körper 1 gespritzt, der auf seiner zu der Mittenachse 3 radial außenliegenden Seite eine Zylindermantelfläche aufweist, die, beim Unterteilen des Kreisring-Körpers 1 in Einzel-Zylinderlinsen bildende Segmente, die Strahlungsaustrittsflächen bildet.

In der Figur 9 ist eine Gießform gezeigt, bei der die kreisringförmig um die Mittenachse 3 verlaufende Nut in der Bodenfläche 19 des unteren Gießformteils 15 und/oder der Bodenfläche 20 des oberen Gießformteils 14 ausgeführt ist. Mit einer solchen Gießform läßt sich ein Kreisring-Körper 1 spritzen, der im Querschnitt der Vorform entspricht, die in Figur 3 dargestellt ist.

Wie anhand der Figuren 7 bis 9 zu ersehen ist, wird bei diesen Gießformen ein wesentlicher Vorteil dadurch erzielt, daß die umlaufende Nut 24 unter Rotieren des Gießformrohlings mit hoher Geschwindigkeit um die Mittenachse 3 herausgedreht wird, indem das spanabhebende Werkzeug nur in einer Richtung, und zwar in der radialen Richtung, die Nut 24 bildend eingreift, wobei darüberhinaus die Nut 24 im Querschnitt absolut symmetrisch zu der Mittenachse 3 ausgeführt wird. Hierdurch entsteht eine Gießform, mit der als Vorform ein Kreisring-Körper 1 gespritzt werden kann, der eine Rotationssymmetrie zu der Mittenachse 3 aufweist. Mit der Gießform nach der Figur 7 kann eine Kreisring-Vorform gespritzt werden, wie sie in Figur 2 dargestellt ist, während mit der Gießform, wie sie in Figur 9 dargestellt ist, eine solche gespritzt werden kann, wie sie in Figur 3 gezeigt ist. Ein solcher Kreisring-Körper 1 kann dann in Einzelsegmente entsprechend der gewünschten Länge der Einzel-Zylinderlinse unterteilt werden. Diese Einzel-Zylinderlinsen sind aufgrund der Symmetrie und der erzielbaren hohen Präzision identische Teile.

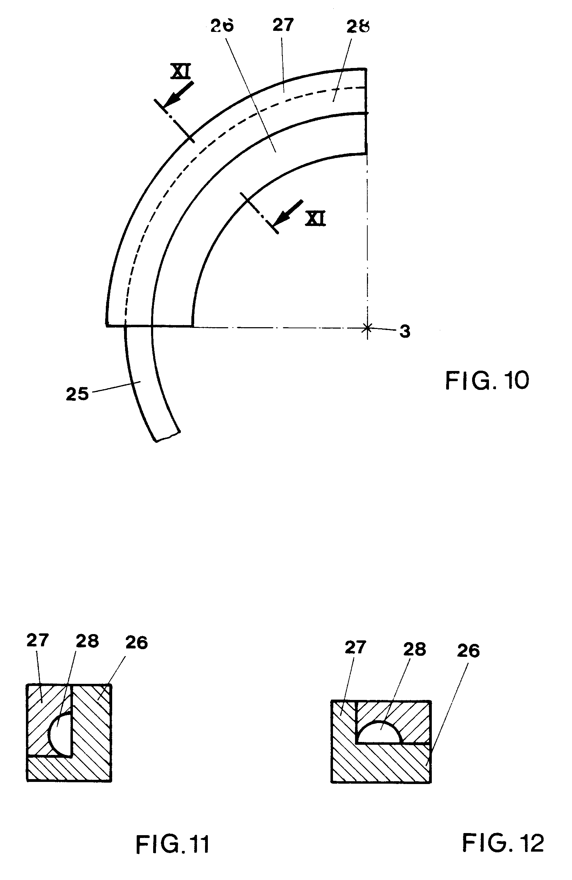

Die Figuren 10 und 11 zeigen, in einer Draufsicht bzw. in einem Querschnitt, schematisch eine zweiteilige Extrudierdüse, mit der ein Strang 25 aus strahlungstransparentem Material extrudiert wird. Entsprechend den zweiteiligen Gießformen, die in den Figuren 7 bis 9 gezeigt sind, ist die Extrudierdüse aus zwei Extrudierdüsenteilen 26, 27 zusammengesetzt, durch die ein Extrudierdüsenkanal 28 in Form eines Kreisbogenabschnitts verläuft. Der Extrudierdüsenkanal 28 bzw. die Ausnehmung ist wiederum dadurch gebildet, daß ein Extrudierdüsenrohling spanabhebend in einer Ultrapräzisionsdrehmaschine bearbeitet wird. Hierbei wird ein solcher Rohling in eine Spanneinrichtung eingespannt. Der Rohling weist vorzugsweise eine solche Größe auf, daß eine kreisringförmige Ausnehmung 28 mit einem Krümmungsmittelpunkt 29 gebildet wird, wobei der Krümmungsmittelpunkt 29 mit der Mittenachse 3, um die der Rohling beim Ausdrehen des Kanals 28 rotiert wird, zusammenfällt. Bevorzugt werden für solche Extrudierdüsen zwei Extrudierdüsenteile 26, 27 gebildet, die prinzipiell den Gießformteilen 14 und 15 der Gießform nach den Figuren 7 bis 9 entsprechen können. Ein solches Drehteil wird dann in mehrere Segmente entsprechend der Figur 10 unterteilt, d.h. mit einem Bearbeitungsvorgang können z.B. vier Extrudierdüsen mit identischer Krümmung des Kanals 28, der über einen Winkelsektor von 90° führt, hergestellt werden.

Je nach Ausführung bzw. Orientierung der Ausnehmung 28 wird ein extrudierter Strang 25 gebildet, dessen Krümmung unterschiedlich zu dem Profil, insbesondere hinsichtlich der ebenen, die Strahlungseintrittsfläche 6 bildenden Fläche orientiert ist. Mit einer solchen Extrudierdüse können endlose Stränge extrudiert werden, die anschließend zu Einzel-Zylinderlinsen unterteilt werden. Auch mit dieser Verfahrensweise zur Herstellung von Einzel-Zylinderlinsen ist wiederum der Vorteil gegeben, daß identische, reproduzierbare Einzel-Zylinderlinsen herstellbar sind.

Gemäß dem Querschnitt der Extrudierdüse, die in Figur 12 dargestellt ist, ist das Querschnittsprofil gegenüber der Figur 11 um 90° gedreht; der damit hergestellte Strang besitzt eine plane, in einer Ebene verlaufende Fläche, während eine Krümmung des extrudierten Strangs in Richtung des Pfeils in dieser Ebene auftritt.

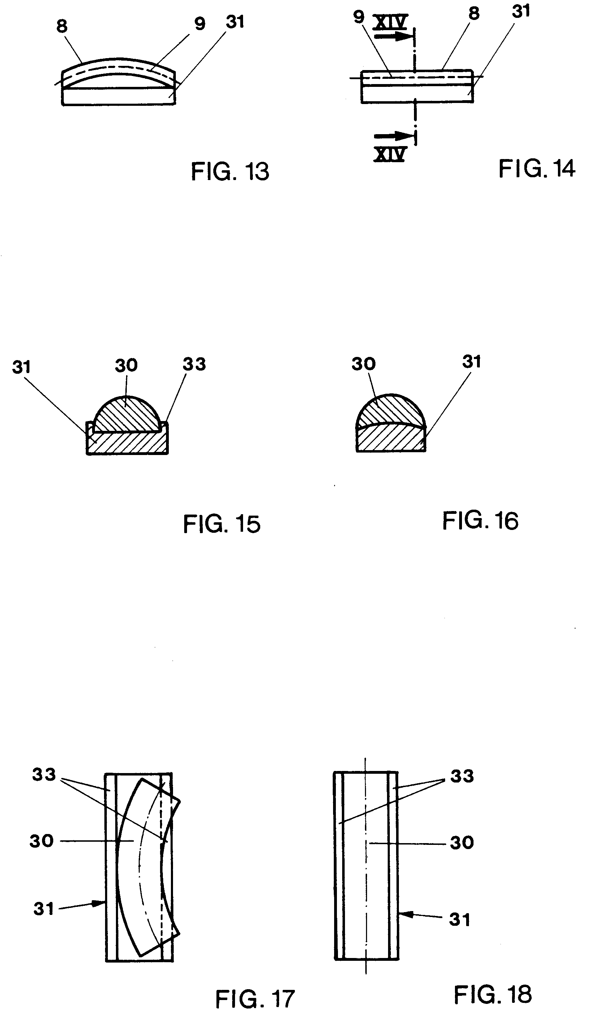

Anhand der einzelnen Ausführungsbeispiele ist ersichtlich, daß die Einzel-Zylinderlinsen, die aus dem Kreisring-Körper 1, entweder als spanabhebende Positivformen oder über Gießformen als Spritzteile oder Extrudierteile hergestellt werden, je nach Anordnung der Strahlungseintritts- und Strahlungsaustrittsfläche eine Krümmung der Achse aufweisen. Bevorzugt wird die Krümmung so gewählt, daß die Strahlungseintrittsfläche konvex in einer durch die in Achsrichtung liegenden Enden aufgespannten Ebene gekrümmt ist. Eine solche Krümmung wird beispielsweise durch ein Querschnittsprofil des Kreisring-Körpers 1 bzw. eine Gießform oder eine Extrudierdüse erzielt, die in den Figuren 2, 6, 7 oder 11 dargestellt sind. Für die üblichen optischen Abbildungsanforderungen ist es erforderlich, daß die Strahlungseintrittsfläche einer Zylinderlinse eine plane Fläche ist. Um eine solche plane Fläche zu erzielen, werden die Einzel-Zylinderlinsen 8, wie schematisch in Figur 13 dargestellt sind, auf ein plattenförmiges, optisches Teil 31 mit einem Klebemittel aufgeklebt. Dieses plattenförmige Teil 31 besitzt eine Biegesteifigkeit, die wesentlich höher als diejenige der nach den verschiedenen Verfahren hergestellten Einzel-Zylinderlinsen 8 ist. Bevorzugt wird ein solches plattenförmiges Teil 31 aus Glas, Quarzglas oder Saphir hergestellt. Es ist ersichtlich, daß solche Platten einfach mit hoher Oberflächengüte hergestellt werden können. Auf ein solches plattenförmiges Teil 31 wird dann die entlang ihrer Zylinderachse 9 gekrümmte Zylinderlinse 8 aufgelegt und mit einem geeigneten Klebemittel unter Anpreßen gegen das plattenförmige Teil 31 verklebt, so daß die Achse 9 der Zylinderlinse 8 geradlinig verläuft, wie dies in Figur 14 dargestellt ist. Auf diese Weise können Durchbiegungen, durch den Abstand 32 der Figur 13 angedeutet, ausgeglichen werden, die im Bereich von 50 bis 100 um liegen.

Da ein weiteres, wichtiges Kriterium für die optische Abbildungsqualität einer Zylinderlinse die exakte Ausrichtung der Zylinderlinse 9 zu dem plattenförmigen Teil 31 ist, können Nuten und/oder Stege 33 von Vorteil sein, wie dies in Figur 15 dargestellt ist. Diese Stege 33 können an den beiden Längskanten des plattenförmigen Teils 31 ausgeführt werden und dienen dazu, beim Aufkleben der Zylinderlinse 8 auf das plattenförmige Teil 31 die Zylinderlinse 8 zu führen. Eine ähnliche Zentierung kann durch eine entsprechende Wölbung der Strahlungseintrittsfläche 6 der Zylinderlinse 8 und der Oberfläche des plattenförmigen Teils 31 erfolgen, wie dies in Figur 16 dargestellt ist. Solche Wöbungen oder Stege und Nuten können in den entsprechenden Flächen der Zylinderlinse 8 beim Herstellen des Kreisring-Körpers 1 der Figuren 1 bis 3 oder aber in die Nut bzw. Ausnehmung der Gießform bzw. der Extrudierdüse, ebenfalls während der spanabhebenden Bearbeitung auf der Ultrapräzisions-Drehmaschine eingearbeitet werden. Mit diesen Justierhilfen können Geradheiten der Linsen-Längsachsen kleiner 1 um erreicht werden. Bevorzugt werden solche Justierhilfen insbesondere bei Einzel-Zylinderlinsen angewandt, die aus Linsenkörpern hergestellt werden, wie er in Figur 3 dargestellt ist.

Figur 17 zeigt eine der Figur 15 ähnliche Anordnung, in einer Draufsicht, mit einer lose aufgelegten, noch nicht gerade ausgerichteten Zylinderlinse 30, die herstellungsbedingt eine gekrümmte Achse aufweist, wie durch die strichpunktierte Linie angedeutet ist. Die gezeigte Zylinderlinse 30 besteht aus einem Teilsegment des in Figur 3 dargestellten Vorform-Körpers 1. Aufgrund der seitlichen Stege 33 an den Seiten des plattenförmigen, optischen Teils 31 kann die Linse 30 mit ihrer Achse gerade ausgerichtet und vor dem Verkleben fixiert werden, wobei nach dem Verkleben eine mit ihrer Achse gerade ausgerichtete Zylinderlinse 30 vorliegt, wie dies in Figur 18 gezeigt ist.

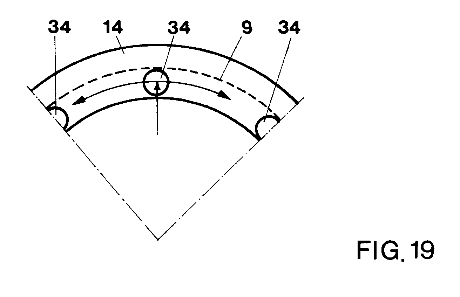

Figur 19 zeigt nochmals eine Gießform als Teilsegment mit Öffnungen 34, die als Spritzöffnungen zum Einspritzen des strahlungstransparenten Materials dienen. Diese Öffnungen 34 sind in einem Abstand voneinander angeordnet, der einem Vielfachen der Länge der herzustellenden Einzel-Zylinderlinse 30 entspricht, so daß aus einer gespritzten Vorform eine maximale Anzahl an Einzel-Zylinderlinsen 8 ohne Beeinträchtigung der optischen Abbildungsqualität durch die Einspritzöffnungen erhalten wird.

Es sollte angemerkt werden, daß in den einzelnen Figuren identische oder vergleichbare Teile, Flächen, Achsen oder sonstige Linien mit denselben Bezugszeichen bezeichnet sind, so daß die speziellen Ausführungen einzelner Figuren auf die anderen Figuren analog übertragbar sind.

## Patentansprüche

1. Vorform, aus der Zylinderlinsen, insbesondere Mikro-Zylinderlinsen, die quer zur Achse gesehen, ein asphärisches Querschnittsprofil aufweisen, herstellbar sind, wobei die Vorform aus strahlungstransparentem Material mindestens ein Teilstück eines Kreisrings bildet, der zwei gegenüberliegende, in Achsrichtung oder senkrecht dazu verlaufende Flächen aufweist, die als Strahlungseintritts- bzw. als Strahlungsaustrittsfläche dienen und der eine Länge aufweist, die einem Vielfachen der Länge einer einzelnen Zylinderlinse entspricht.

2. Vorform nach Anspruch 1, dadurch gekennzeichnet, daß sie ein Kreisring ist, dessen Umfang einem Vielfachen der Länge einer Einzel-Zylinderlinse entspricht

3. Verfahren zur Herstellung von asphärischen Zylinderlinsen, insbesondere von Mikro-Zylinderlinsen, bei dem ein Materialrohling aus strahlungstransparentem Material spanabhebend bearbeitet wird, gekennzeichnet durch folgende Verfahrensschritte:
Bereitstellung eines Materialrohlings, dessen Länge einem Vielfachen der Länge einer zu erstellenden Einzel-Zylinderlinse beträgt,
Bildung eines geschlossenen Rings aus dem Matrialrohling,
Einspannen des Rings in eine Halteeinrichtung,
Rotieren des Rings mit hoher Drehgeschwindigkeit um eine Mittenachse senkrecht zu der durch den Ring aufgespannten Ebene,
Abdrehen der freien Außenfläche des Rings entsprechend der Querschnitts-Außenkontur der zu erstellenden, eine Strahlungseintritts- und/oder Strahlungsaustrittsfläche aufweisenden Einzel-Zylinderlinse unter radialer und/oder axialer Verschiebung eines Zerspanungswerkzeugs,
Unterteilen des bearbeiteten Rings in einzelne, Einzel-Zylinderlinsen bildende Teilsegmente.

4. Verfahren nach Anspruch 3, dadurch gekennzeichnet, daß der Ring aus einem plattenförmigen Materialrohling gebildet wird, dessen einer Randbereich in die Halteeinrichtung eingespannt wird.

5. Verfahren nach Anspruch 3, dadurch gekennzeichnet, daß der Ring auf einer Trägerplatte gebildet wird, wobei die Trägerplatte in der Halteeinrichtung eingespannt wird.

6. Verfahren nach einem der Ansprüche 3 bis 5, dadurch gekennzeichnet, daß an der freien Stirnfläche des Rings die Strahlungsaustrittsfläche der zu erstellenden Einzel-Zylinderlinse gebildet wird.

7. Verfahren zur Herstellung von asphärischen Zylinderlinsen, insbesondere von Mikro-Zylinderlinsen, bei dem eine Gießform gebildet und in der Gießform strahlungstransparentes Material gegossen wird, gekennzeichnet, durch folgende Verfahrensschritte:
Bereitstellung mindestens zweier Gießformrohlinge für spanabhebende Bearbeitung,
Bildung einer mindestens zweiteiligen Gießform,
indem in dem einen Gießformrohling eine Vertiefung mit einer zu einer Mittenachse rotationssymmetrisch verlaufenden, die Vertiefung begrenzenden Mantelfläche gebildet wird,
indem der andere Gießformrohling in seiner Außenkontur der Vertiefung angepaßt wird,
indem mindestens einer dieser Gießformrohlinge unter Einspannung in eine Halteeinrichtung mit hoher Drehgeschwindigkeit um die Mittenachse rotiert wird,
indem in der Mantelfläche oder in der senkrecht zur Mittenachse verlaufenden Bodenfläche eine umlaufende Nut herausgedreht wird, die im Querschnitt zumindest teilweise der Querschnitts-Außenkontur hinsichtlich der Strahlungsaustrittsoder der Strahlungseintrittsfläche der zu erstellenden Einzel-Zylinderlinse entspricht, und zwar unter radialer und/oder axialer Verschiebung eines Zerspanungswerkzeugs,
indem die Nut durch Ineinandersetzen der beiden Gießformrohlinge verschlossen wird,
anschließendes Ausgießen der Nut mit dem strahlungstransparenten Material,
Aushärten des Materials,
Herausnahme des ausgehärteten Material-Rings aus der Gießform,
Unterteilen des Material-Rings in einzelne, Einzel-Zylinderlinsen bildende Teilsegmente.

8. Verfahren nach Anspruch 7, dadurch gekennzeichnet, daß als Mantelfläche eine Zylindermantelfläche gebildet wird.

9. Verfahren nach Anspruch 8, dadurch gekennzeichnet, daß die Zylindermantelfläche des einen Gießformrohlings die die Strahlungseintrittsfläche bildende Fläche des Gießformrohlings bildet.

10. Verfahren nach Anspruch 8, dadurch gekennzeichnet, daß die Bodenfläche des einen Gießformrohlings die die Strahlungseintrittsfläche bildende Fläche des Gießformrohlings bildet.

11. Verfahren nach einem der Ansprüche 7 bis 10, dadurch gekennzeichnet, daß entlang der Nut Spritzöffnungen ausgebildet werden, deren radialer Abstand zueinander einem Vielfachen der Länge der zu erstellenden Einzellinse ist.

12. Verfahren zur Herstellung von asphärischen Zylinderlinsen, insbesondere von Mikro-Zylinderlinsen, bei dem eine Form gebildet wird, gekennzeichnet, durch folgende Verfahrensschritte:
Bereitstellung mindestens zweier Extrudierdüsenrohlinge für spanabhebende Bearbeitung,
Bildung einer mindestens zweiteiligen Extrudierdüse,
indem in dem einen und/oder dem anderen Extrudierdüsenrohling eine konzentrisch zu einer Mittenachse verlaufende Ausnehmung gebildet wird, wobei dies durch Einspannen des Extrudierdüsenrohlings in eine Halteeinrichtung und unter Rotieren mit hoher Drehgeschwindigkeit, und zwar unter radialer und/oder axialer Verschiebung eines Zerspanungswerkzeugs erfolgt, wobei die Ausnehmung mindestens teilweise der Querschnitts-Außenkontur hinsichtlich der Strahlungsaustrittsoder der Strahlungseintrittsfläche der zu erstellenden Einzel-Zylinderlinse entspricht,
indem die so bearbeiteten Extrudierdüsenrohlinge so aneinander angepaßt werden, daß die Ausnehmung(en) einen Extrudierdüsenkanal in Form eines Kreisbogenabschnitts bilden,
Extrudieren eines Strangs aus strahlungstransparentem Material,
Aushärten des Material-Strangs,
Unterteilen des Material-Strangs in einzelne, Einzel-Zylinderlinsen bildende Teilsegmente.

13. Verfahren nach Anspruch 12, dadurch gekennzeichnet, daß in dem einen Extrudierdüsenrohling eine Zylindermantel(teil)fläche gebildet wird.

14. Verfahren nach Anspruch 13, dadurch gekennzeichnet, daß die Zylindermantel(teil)fläche des einen Extrudierdüsenrohlings die die Strahlungseintrittsfläche bildende Fläche des Material-Strangs bildet.

15. Verfahren nach Anspruch 13, dadurch gekennzeichnet, daß in Richtung der Mittenachse verlaufend die den Extrudierdüsenkanal bildende(n) Ausnehmung(en) das die Strahlungseintrittsfläche und das die Strahlungseintrittsfläche und das die Strahlungsaustrittsfläche bildende Querschnittsprofil aufweist (aufweisen).

16. Verfahren nach Anspruch 14, dadurch gekennzeichnet, daß die Strahlungseintrittsfläche durch eine Fläche gebildet wird, die in einer senkrecht zur Mittenachse verlaufenden Ebene liegt.

17. Verfahren nach einem der Ansprüche 6, 7, 9, 10 oder 12, dadurch gekennzeichnet, daß nach dem Unterteilen auf die Einzel-Zylinderlinse ein optisches Teil aufgeklebt wird.

18. Verfahren nach Anspruch 17, dadurch gekennzeichnet, daß das optische Teil ein beigesteifes Teil mit einer planen oder gewölbten Fläche, die die Verbindungsfläche bildet, ist.

19. Verfahren nach Anspruch 17 oder 18, dadurch gekennzeichnet, daß im Bereich der Verbindungsflächen der Einzel-Zylinderlinse und des optischen Teils Wölbungen als Zentrierhilfen ausgebildet werden.

20. Verfahren nach Anspruch 17, dadurch gekennzeichnet, daß das optische Teil aus einem strahlungstransparenten Material mit einem hohen Brechungsindex gebildet ist.

21. Verfahren nach Anspruch 17, dadurch gekennzeichnet, daß Hohlräume zwischen der Einzel-Zylinderlinse und dem optischen Teil mit dem Aufkleben durch Klebemittel aufgefüllt werden, dessen Brechungsindex dem strahlungstransparenten Material der Einzel-Zylinderlinse angepaßt ist.

22. Verfahren nach Anspruch 17, dadurch gekennzeichnet, daß im Bereich der Klebefläche an der Einzel-Zylinderlinse und/oder dem optischen Teil Zentrierhilfen in Form von Vorsprüngen und/oder Vertiefungen und/oder Oberflächenwölbungen ausgebildet werden.

23. Verfahren nach Anspruch 17, dadurch gekennzeichnet, daß das optische Teil aus Glas, Quarzglas oder Saphir gebildet wird.

24. Verwendung der nach dem Verfahren gemäß der Ansprüche 3 bis 23 hergestellten Zylinderlinsen zur Kollimation der von Laserdioden ausgehenden Strahlung.
